# FASCICULE DE BREVET EUROPEEN

(11) **EP 2 685 926 B1**
(45) Date de publication et mention de la délivrance du brevet: **28.10.2020**
(21) Numéro de dépôt: 12713856.8
(22) Date de dépôt: 13.03.2012
(51) Int. Cl.: A61C 5/42

(54) **INSTRUMENT ENDODONTIQUE POUR L'ALESAGE DE CANAUX RADICULAIRES**
ENDODONTISCHES INSTRUMENT ZUM BOHREN IN ZAHNWURZELKANÄLE
ENDODONTIC INSTRUMENT FOR DRILLING ROOT CANALS

(30) Priorité: 18.03.2011 CH 465112011
(43) Date de publication de la demande: 22.01.2014
(73) Titulaire: FKG Dentaire S.A., 2304 La Chaux-de-Fonds (CH)
(72) Inventeur: BREGUET, Olivier, CH-2400 Le Locle (CH)
(74) Mandataire: Nithardt, Roland
(86) Numéro de dépôt international: PCT/CH2012/000057
(87) Numéro de publication internationale: WO 2012/126128

(56) Documents cités:
- EP-A1- 1 752 109
- WO-A1-2010/098385
- WO-A1-2011/042662
- US-A1- 2010 119 990

## Description

### Domaine technique

La présente invention concerne un instrument endodontique pour l'alésage de canaux radiculaires, notamment un instrument d'alésage flexible, ledit instrument présentant un axe longitudinal de rotation et comportant une partie, dite de travail, terminée à une extrémité par une pointe et à l'autre extrémité par un embout de maintien agencé pour être fixé à un mandrin entraîné par un moteur électrique, ladite partie de travail comportant au moins une goujure hélicoïdale qui comporte au moins une crête ayant une arête avec un sommet, un flanc intérieur et un flanc extérieur, disposés de part et d'autre de ladite arête, le sommet de l'arête étant situé sur un cercle dont le centre est disposé sur l'axe longitudinal de rotation de l'instrument.

### Technique antérieure

Le nettoyage et la mise en forme des canaux radiculaires pour recevoir les substances d'obturation s'effectuent par l'utilisation d'instruments d'alésage ayant une partie active, dite partie de travail, conique et comportant plusieurs arêtes de coupe enroulées en hélice le long de cette partie de travail.

Ce type d'instruments dentaires est par exemple illustré par la publication internationale WO 2007/016278 A1 qui décrit un instrument endodontique sensiblement conique comportant plusieurs goujures hélicoïdales avec des pas d'hélices variables selon les secteurs du tronçon actif. Ces instruments, appelés limes endodontiques, sont conçus pour une utilisation manuelle ou pour une utilisation mécanisée. Lorsque les limes endodontiques sont entraînées par un moteur électrique, elles tournent en vitesse lente (par exemple entre 150 et 600 tours/min) et progressent dans l'ouverture du canal de telle manière que leur zone active puisse couper ou racler les parois du canal radiculaire. Des zones de longueur réduite au début d'une intervention, s'étendent de plus en plus lors de l'avancée des limes dans les canaux. Le couple d'entraînement, qui doit être appliqué aux limes afin de surmonter les forces de friction croissantes et de faire tourner les limes à la vitesse désirée lors de leur avance, s'accroît de plus en plus. Plus la progression dans le canal augmente plus le risque de blocage ou de vissage de la lime augmente. Lorsque ce cas se produit, le couple appliqué sur la lime augmente brutalement et la lime risque de casser. La cassure de la lime dans le canal radiculaire est l'accident redouté du dentiste, car la pointe cassée est généralement irrécupérable.

L'instrument endodontique objet de la publication EP 1 752 109 comporte plusieurs, et en particulier trois goujures hélicoïdales qui définissent des surfaces concaves dont les extrémités sont situées sur un cercle circonscrit. Ces extrémités constituent les sommets des angles d'usinage de l'instrument et au moins un des côtés de ces angles est constitué par lesdites surfaces concaves des goujures. Il se trouve que ces angles sont tous négatifs ou neutres de manière à constituer des angles de raclage, mais en aucun cas des angles de coupe, sachant que seuls des angles positifs sont susceptibles d'avoir une fonction de coupe. Or pour être positifs, les tangentes aux côtés des angles doivent être situées d'un même côté du rayon du cercle circonscrit correspondant au sommet de cet angle. Cet instrument ne peut donc pas être utilisé en tant qu'instrument suffisamment coupant pour façonner un canal radiculaire.

Une autre réalisation ayant pour but d'adapter l'instrument à des technologies différentes est la publication de la demande de brevet américain US 2010/119990 A1 décrivant un appareil ayant des formes générales de profils qui se retrouvent à divers espaces sur le secteur de travail.

Un autre instrument d'endodontie est révélé dans la publication WO 2011/042662 A1.

Par ailleurs, les instruments actuellement disponibles sur le marché pour la mise en œuvre de la nouvelle technique d'utilisation de limes à entraînement mécanique sont directement dérivés des instruments traditionnels de forme hélicoïdale à usage manuel. Cette forme en hélice est souvent à l'origine d'un phénomène de vissage et de blocage qui peut entraîner une cassure de l'instrument.

Un autre problème qui peut survenir vient de ce que l'instrument, au lieu de suivre la forme du canal radiculaire d'origine dans les zones fortement incurvées, peut avoir tendance à creuser son propre passage ou à déformer les parois du canal d'origine, lorsque les arêtes des goujures sont trop coupantes. L'une des solutions consiste à émousser de façon plus ou moins marquée les arêtes de coupe de l'instrument afin d'éviter qu'elles entaillent la matière et se forent un passage qui ne correspond pas à la forme naturelle du canal. Cet effet peut être obtenu par un méplat radian élargi, qui est réalisé sur un instrument endodontique sur lequel l'écart entre les arêtes des goujures est agrandi. Cette géométrie permet d'émousser les arêtes, mais présente l'inconvénient d'augmenter la friction de travail de sorte que l'échauffement de l'instrument s'accroît, ce qui engendre un risque de rupture. En outre, l'élargissement du méplat radian augmente la rigidité de l'instrument de sorte que la diminution résultante de la flexibilité augmente le risque de déviation incontrôlée dans les zones courbes des canaux radiculaires.

Enfin les parois d'un canal radiculaire nécessitent des traitements différents sur sa longueur de ce canal, de sorte que le chirurgien dentiste doit adapter ses instruments en fonction des résultats qu'il veut obtenir. Les instruments actuels ne permettent pas de réaliser des séquences de traitement variables sur la longueur du canal radiculaire et nécessitent l'utilisation d'une suite d'instruments ayant des géométries différentes d'un instrument à l'autre.

### Exposé de l'invention

La présente invention se propose de pallier l'ensemble des inconvénients ci-dessus et de fournir des moyens permettant d'assurer une préparation efficace du canal radiculaire, en mettant à la disposition du praticien un instrument suffisamment coupant aux endroits souhaités pour façonner le canal radiculaire comme il convient, suffisamment émoussé aux endroits souhaités pour éviter d'entailler la matière et de respecter le tracé d'origine et suffisamment souple pour suivre le canal dans les zones fortement incurvées.

Ce but est atteint par l'instrument selon la revendication 1.

Selon une forme de réalisation particulièrement avantageuse dans laquelle l'instrument comporte trois goujures définissant trois crêtes comportant chacune une arête portant un sommet et deux flancs, respectivement intérieurs et extérieurs, disposés de part et d'autre de ladite arête, à différents niveaux de la longueur de la partie de travail, les angles de coupe aux sommets respectifs, définis par les tangentes aux sommets des flancs intérieurs des crêtes avec les rayons respectifs du cercle correspondant aux sommets, sont variables en grandeur, indépendamment les uns des autres, sur au moins une zone déterminée de ladite partie de travail, et sont soit négatifs lorsque les tangentes aux flancs intérieurs des crêtes sont disposées du côté opposé aux tangentes aux flancs extérieurs opposés desdites crêtes par rapport aux rayons du cercle, soit nuls lorsque les tangentes aux flancs intérieurs des crêtes sont confondues avec les rayons du cercle, soit positifs lorsque les tangentes aux flancs intérieurs des crêtes sont disposées du même côté que les tangentes aux flancs extérieurs opposés desdites crêtes par rapport aux rayons du cercle, pour définir le long des arêtes d'une même crête, une zone de raclage, une zone de coupe plus ou moins active, de façon à ce que la partie de travail comporte au moins une zone dite de raclage, au moins une zone dite neutre, et au moins une zone dite de coupe active.

Selon une forme de réalisation préférée, l'instrument endodontique comporte au moins une zone dans laquelle l'angle de coupe au sommet respectif est progressivement croissant de la pointe vers l'embout de maintien dudit instrument.

Selon une autre forme de réalisation préférée, l'instrument endodontique comporte au moins au moins une zone dans laquelle l'angle de coupe au sommet respectif est progressivement décroissant de la pointe vers l'embout de maintien dudit instrument.

L'instrument endodontique peut comporter avantageusement plusieurs zones réparties le long de la partie de travail, dans lesquelles l'angle de dépouille à un sommet, qui est l'angle formé par la tangente à ce sommet au flanc de la crête correspondante, avec la tangente à ce même sommet au cercle, l'angle de taillant formé par ladite tangente, avec la tangente au flanc de la même crête et l'angle de coupe sont différents d'une zone à une autre.

L'instrument endodontique peut comporter, sur sa partie de travail, au moins une zone dite de coupe.

L'instrument endodontique peut comporter, sur sa partie de travail, au moins une zone dite de raclage.

L'instrument endodontique peut comporter, sur sa partie de travail, au moins une zone dite neutre.

Selon d'autres formes de réalisation, l'instrument peut comporte deux ou quatre goujures qui définissent deux ou quatre crêtes comportant chacune une arête portant un sommet et deux flancs respectivement disposés de part et d'autre de ladite arête.

### Description sommaire des dessins

La présente invention et ses principaux avantages apparaîtront mieux dans la description de différents modes de réalisation, en référence aux dessins annexés, dans lesquels:
La figure 1 est une vue schématique en coupe illustrant une section transversale d'une première forme de réalisation particulière de l'instrument selon l'invention,
La figure 2 est une vue schématique en coupe illustrant une section transversale d'une deuxième forme de réalisation particulière de l'instrument selon l'invention,
La figure 3 est une vue schématique en coupe illustrant une section transversale d'une troisième forme de réalisation particulière de l'instrument selon l'invention,
La figure 4 est une vue schématique en coupe illustrant une section transversale d'une quatrième forme de réalisation particulière de l'instrument selon l'invention,
la figure 5 représente une vue d'ensemble d'une forme de réalisation de l'instrument selon l'invention,
les figures 5A, 5B, 5C, 5D et 5E représentent des vues en coupe transversale de l'instrument de la figure 5 à différents niveaux de la partie de travail,
la figure 5AA est une vue agrandie de la figure 5A,
la figure 6 représente une vue d'une autre forme de réalisation de l'instrument selon l'invention,
les figures 6A, 6B, 6C, 6D et 6E représentent des vues en coupe transversale de l'instrument de la figure 6 à différents niveaux de la partie de travail,
la figure 6AA est une vue agrandie de la figure 6A,
la figure 7 représente une vue d'une autre forme de réalisation de l'instrument selon l'invention,
les figures 7A, 7B, 7C, 7D, 7E et 7F représentent des vues en coupe transversale de l'instrument de la figure 7 à différents niveaux de la partie de travail,
la figure 7AA est une vue agrandie de la figure 7A,
la figure 8 représente une vue d'une quatrième forme de réalisation de l'instrument selon l'invention,
les figures 8A, 8B, 8C, 8D, 8E et 8F représentent des vues en coupe transversale de l'instrument de la figure 8 à différents niveaux de la partie de travail,
la figure 8AA est une vue agrandie de la figure 8A,
la figure 9 représente une vue d'une cinquième forme de réalisation de l'instrument selon l'invention,
les figures 9A, 9B, 9C, 9D, 9E, 9F et 9G représentent des vues en coupe transversale de l'instrument de la figure 9 à différents niveaux de la partie de travail,
la figure 9AA est une vue agrandie de la figure 9A,
la figure 10 représente une vue d'une sixième forme de réalisation de l'instrument selon l'invention,
les figures 10A, 10B, 10C, 10D, 10E, 10F et 10G représentent des vues en coupe transversale de l'instrument de la figure 10 à différents niveaux de la partie de travail,
la figure 10AA est une vue agrandie de la figure 10A,
la figure 11 représente une vue d'une septième forme de réalisation de l'instrument selon l'invention,
les figures 11A, 11B, 11C, 11D, 11E, 11F et 11G représentent des vues en coupe transversale de l'instrument de la figure 11 à différents niveaux de la partie de travail,
la figure 11AA est une vue agrandie de la figure 11A,
la figure 12 représente une vue d'une huitième forme de réalisation de l'instrument selon l'invention,
les figures 12A, 12B, 12C, 12D, 12E, 12F et 12G représentent des vues en coupe transversale de l'instrument de la figure 12 à différents niveaux de la partie de travail, et
la figure 12AA est une vue agrandie de la figure 12A.

### Meilleures manières de réaliser l'invention

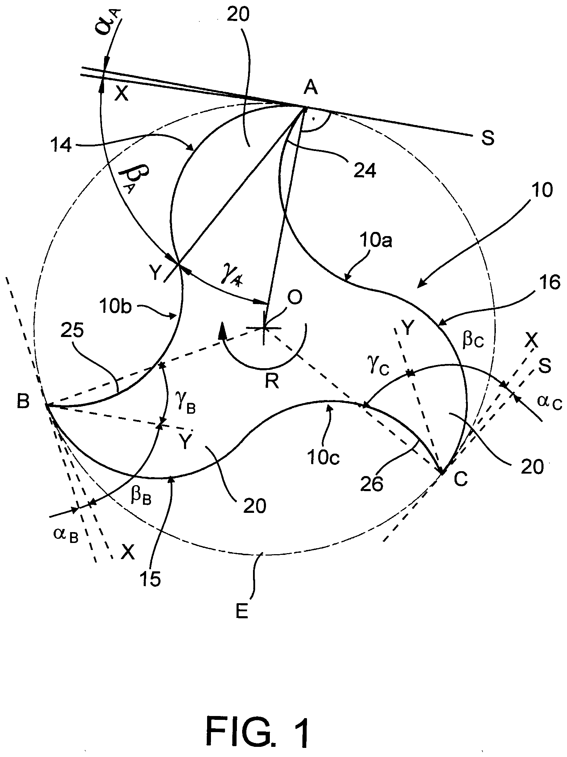

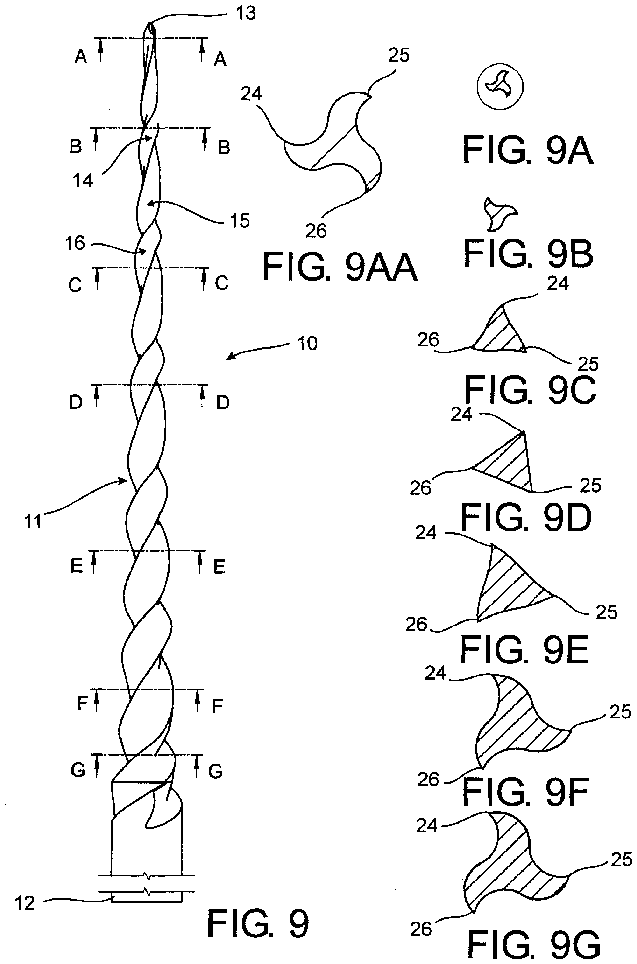

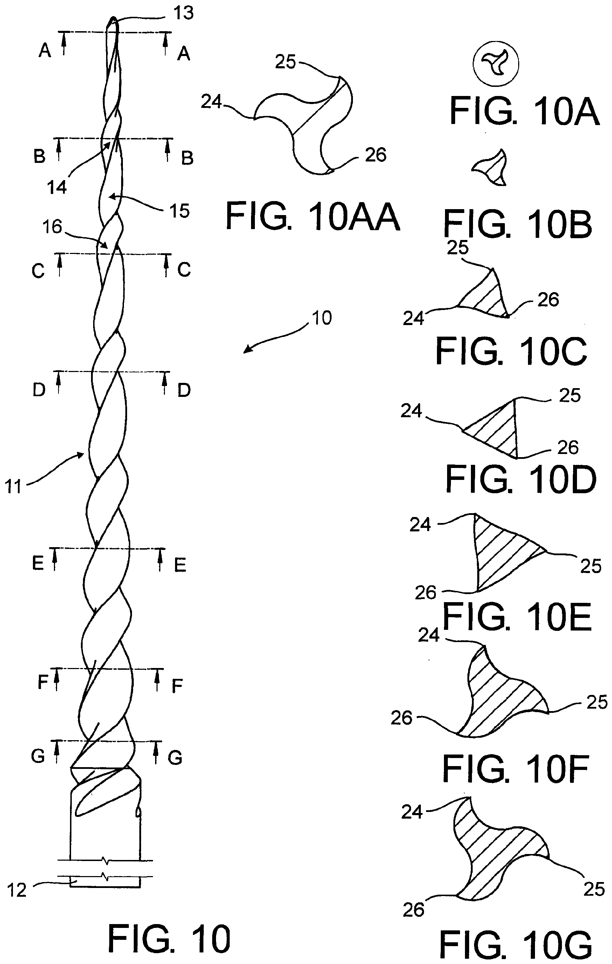

La figure 1 représente une vue en coupe selon un plan transversal, perpendiculaire à l'axe longitudinal de rotation d'un instrument ou lime endodontique 10, telle que représenté par les figures 9 et 10. L'instrument 10 comporte dans ce cas trois goujures hélicoïdales 14, 15, 16 qui définissent trois crêtes 20 dont les arêtes 24, 25, 26 portent des sommets A, B et C et trois flancs 10a, 10b et 10c, alternativement intérieurs et extérieurs, disposés de part et d'autre des arêtes. La coupe transversale définit une section sensiblement triangulaire de sommets A, B et C qui sont situés sur un cercle E dont le centre O est disposé sur l'axe longitudinal de rotation de l'instrument. Les arêtes 24, 25, 26 constituent les lieux géométriques des sommets A, respectivement B et C. Le sens de la rotation de l'instrument 10 est représenté par la flèche R en forme d'arc de cercle.

L'angle α_{A,}, appelé angle de dépouille au sommet A, est défini comme étant l'angle que forme la tangente AX en A au flanc extérieur10b de la crête 20 dont l'arête 24 porte ce sommet A, avec la tangente AS en A, au cercle circonscrit E. De façon similaire, on pourrait définir l'angle α_{B} de dépouille au sommet B comme étant l'angle que forme la tangente BX en B au flanc extérieur 10c de la crête 20 dont l'arête 25 porte ce sommet B, avec la tangente BS en B au cercle circonscrit E, et l'angle ac de dépouille au sommet C comme étant l'angle que forme la tangente CX en C au flanc extérieur 10a de la crête 20 dont l'arête26 porte ce sommet C, avec la tangente CS au sommet C au cercle circonscrit E.

On appelle angle de taillant au sommet A, l'angle β_{A} ou angle XAY l'angle que forme la tangente AX en A au flanc extérieur 10b de la crête 20 dont l'arête 24 porte le sommet A, avec la tangente AY en A au flanc intérieur10a de la même crête dont l'arête 24 porte le sommet A. On appellera, de façon similaire, l'angle β_{B} ou angle XBY l'angle que forme la tangente BX en B au flanc extérieur 10c de la crête 20 dont l'arête 25 porte le sommet B, avec la tangente BY en B au flanc intérieur 10b de la même crête dont l'arête 25 porte le sommet B et l'angle β_{C} ou angle XCY, l'angle que forme la tangente CX en C au flanc extérieur 10a de la crête 20 dont l'arête 26 porte le sommet C, avec la tangente CY en C au flanc intérieur10c de la même crête 20 dont l'arête 26 porte le sommet C.

On appelle angle de coupe γ_{A} en A, l'angle que forme la tangente AY au sommet A au flanc intérieur 10a de la crête 20 dont l'arête 24 porte le sommet A, avec le rayon AO du cercle circonscrit E correspondant au sommet A. De façon similaire, l'angle de coupe γ_{B} en B, est l'angle que forme la tangente BY au sommet B au flanc intérieur 10b de la crête 20 dont l'arête 25 porte le sommet B avec le rayon BO correspondant au sommet B et l'angle de coupe yc en C est l'angle que forme la tangente CY au sommet C au flanc intérieur 10c de la crête 20 dont l'arête 26 porte le sommet C avec le rayon CO correspondant au sommet C.

Un angle de coupe y est dit positif, lorsque la tangente au flanc intérieur d'attaque de la crête 20 concernée est disposée du même côté que la tangente au flanc extérieur opposé de cette crête par rapport au rayon correspondant. Dans le cas des angles γ_{A}, γ_{B}, γ_{C}, ou YAO, YBO, YCO, les tangentes respectives AY, BY et CY sont effectivement disposées du même côté que les tangentes AX, BX et CX par rapport aux rayons respectifs AO, BO et CO. Les angles de coupe sont dits positifs et l'instrument a une caractéristique essentiellement coupante dans la zone concernée.

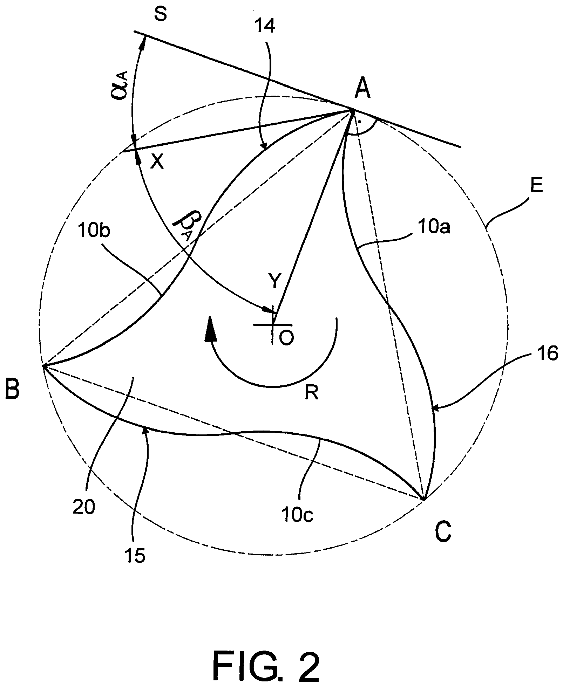

La figure 2 est une vue similaire à celle de la figure 1, mais simplifiée pour des raisons de clarté. L'instrument 10 comporte comme précédemment trois goujures hélicoïdales 14, 15, 16. Comme précédemment, la coupe transversale définit une section sensiblement triangulaire de sommets A, B et C qui sont inscrits dans un cercle circonscrit E. Les goujures 14, 15, 16 définissent des crêtes 20 dont les arêtes sont les lieux géométriques des sommets A, respectivement B et C.

L'angle α_{A} appelé angle de dépouille au sommet A, est défini comme étant l'angle que forme la tangente AX en A au flanc extérieur 10b de la crête 20 dont l'arête porte ce sommet A, avec la tangente AS en A, au cercle circonscrit E. De façon similaire, on pourrait définir l'angle α_{B} de dépouille au sommet B comme étant l'angle que forme la tangente BX en B au flanc extérieur 10c de la crête 20 dont l'arête porte le sommet B, avec la tangente BS en B au cercle circonscrit E, et l'angle ac de dépouille au sommet C comme étant l'angle que forme la tangente CX en C au flanc extérieur 10a de la crête 20 dont l'arête porte le sommet C, avec la tangente CS au sommet C au cercle circonscrit E.

On appelle angle de taillant au sommet A, l'angle β_{A} ou angle XAY, l'angle que forme la tangente AX en A au flanc extérieur 10b de la crête 20 dont l'arête porte le sommet A, avec la tangente AY en A au flanc intérieur 10a de la même crête 20 dont l'arête porte le sommet A. On appellera, de façon similaire, l'angle β_{B} ou angle XBY, l'angle que forme la tangente BX en B au flanc extérieur 10c de la crête 20 dont l'arête porte le sommet B, avec la tangente BY en B au flanc intérieur 10b de la même crête dont l'arête porte le sommet B et l'angle β_{C} ou angle XCY, l'angle que forme la tangente CX en C au flanc extérieur 10a de la crête 20 dont l'arête porte le sommet C, avec la tangente CY en C au flanc intérieur 10c de la même crête 20 dont l'arête porte le sommet C.

On appelle angle de coupe γ_{A} en A, l'angle que forme la tangente AY au sommet au flanc intérieur 10a de la crête 20 dont l'arête porte le sommet A, avec le rayon AO correspondant au sommet A. De façon similaire, l'angle de coupe γ_{B} en B, l'angle que forme la tangente BY au sommet B au flanc intérieur 10b de la crête 20 dont l'arête porte le sommet B avec le rayon BO correspondant au sommet B et l'angle de coupe γ_{C} en C, l'angle que forme la tangente CY au sommet C au flanc intérieur 10c de la crête 20 dont l'arête porte le sommet C avec le rayon CO correspondant au sommet C.

Dans ce cas l'angle de coupe γ_{A} qui définit l'orientation de la crête correspondant au sommet A est nul. L'arête de la crête est dite neutre. La tangente AY est confondue avec le rayon AO.

Dans le cas de la figure 1, l'instrument est un outil pour couper la matière dans la zone représentée et dans le cas de la figure 2, l'instrument est un outil pour racler la matière dans la zone représentée.

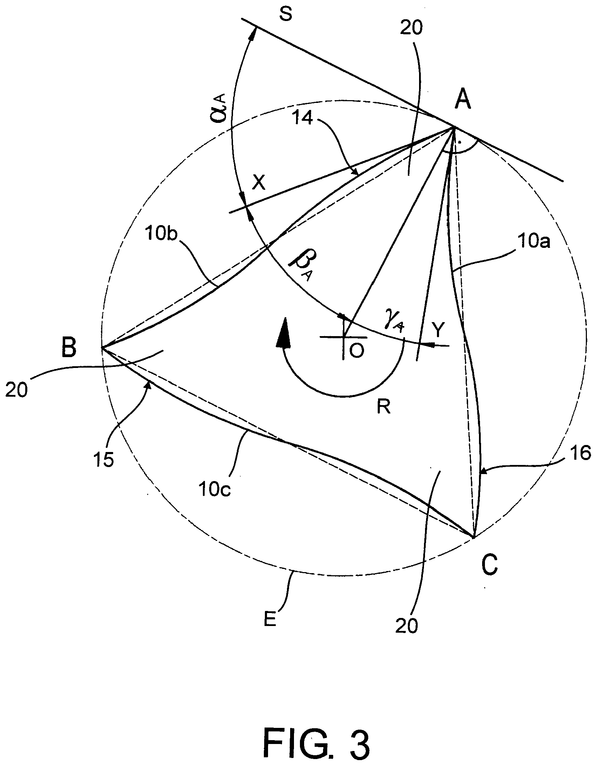

La figure 3 représente une vue similaire à celle de la figure 2. L'instrument 10 comporte comme précédemment trois goujures hélicoïdales 14, 15, 16. Comme précédemment, la coupe transversale définit une section sensiblement triangulaire de sommets A, B et C qui sont inscrits dans un cercle circonscrit E. Les goujures 14, 15, 16 définissent des crêtes 20 dont les arêtes sont les lieux géométriques des sommets A, respectivement B et C.

L'angle de taillant, l'angle de dépouille et l'angle de coupe ont la même définition que précédemment. Dans ce cas l'angle de coupe γ_{A} qui définit l'orientation de l'arête correspondant au sommet A est négatif. La tangente intérieure à la surface dite d'attaque de la crête 20 concernée est disposée du côté opposé à la tangente à la surface opposée de la crête 20 concernée par rapport au rayon correspondant AO.

Dans le cas de la figure 3, l'instrument est un outil pour racler la matière dans la zone représentée et non un outil de coupe.

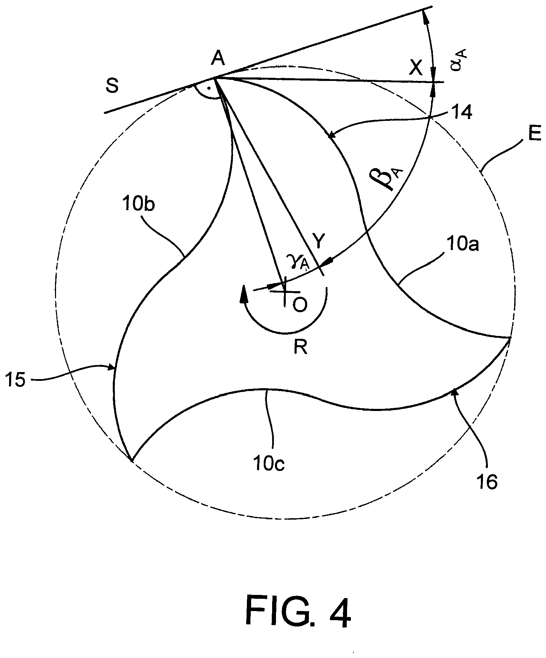

La figure 4 représente une vue similaire à celle des figures 2 et 3. L'instrument 10 comporte comme précédemment trois goujures hélicoïdales 14, 15 et 16. Comme précédemment, la coupe transversale définit une section sensiblement triangulaire de sommets A, B et C qui sont inscrits dans un cercle circonscrit E. Les goujures définissent des crêtes dont les arêtes sont les lieux géométriques des sommets A, respectivement B et C. L'angle α_{A} appelé angle de dépouille au sommet A, est défini comme étant l'angle que forme la tangente AX au sommet A à la surface extérieure du flanc 10a avec la perpendiculaire au rayon AO du cercle circonscrit E, ou la tangente AS au sommet A par rapport au cercle circonscrit E.

L'angle de taillant, l'angle de dépouille et l'angle de coupe ont la même définition que précédemment. Dans ce cas l'angle de coupe γ_{A} qui définit l'orientation de l'arête correspondant au sommet A est positif. La tangente AX à la surface dite d'attaque de la crête 20 concernée est disposée du même côté que la tangente AY à la surface opposée 10bde la crête 20 concernée par rapport au rayon correspondant AO. Compte tenu de l'orientation de la surface d'attaque par rapport au sens de rotation R, l'instrument est un instrument de raclage dans la zone de la coupe transversale représentée

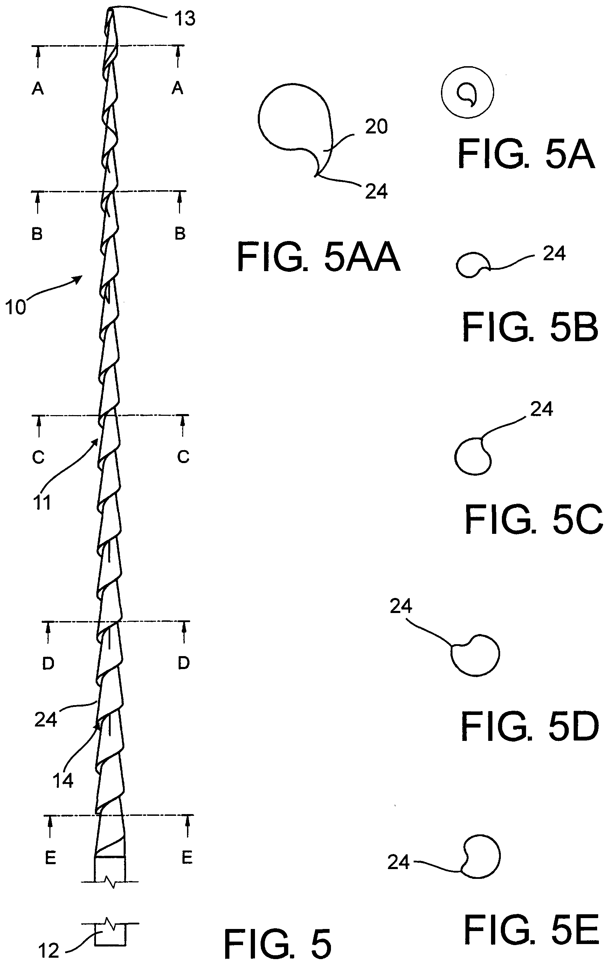

En référence à la figure 5, l'instrument ou lime endodontique 10 comporte une partie dite de travail 11 et un embout de fixation 12 destiné à monter l'instrument dans un mandrin d'un support, du type contre-angle, équipé d'un moteur électrique l'entraînant dans le sens des aiguilles d'une montre. Dans cet exemple, l'enveloppe de la partie de travail 11 a une forme conique sur toute sa longueur et se termine par une pointe 13, l'embout de maintien 12 étant cylindrique pour assurer son maintien dans le mandrin (non représenté). Dans cette forme de réalisation, la partie de travail 11 est pourvue d'une seule goujure hélicoïdale 14 formant une crête 20 ayant une arête, dite arête de coupe 24.

Dans cette forme de réalisation les vues en coupe transversale 5A à 5E selon des plans de coupe respectivement désignés par A-A; B-B; C-C; D-D et E-E, ainsi que la vue agrandie de la figure 5 AA montrent la disposition de l'arête 24. Cette réalisation correspond, à la nuance près que l'instrument 10 ne comporte qu'une seule goujure 14, à l'instrument décrit en référence à la figure 1. L'instrument est un outil de coupe avec un angle de coupe y positif dans la partie voisine de la pointe 13, mais variable sur la longueur de la partie de travail 11.

On constate que l'angle de taillant β, l'angle de dépouille α et l'angle de coupe γ sont variables tout au long de la partie de travail 11. Dans le présent cas, l'instrument est particulièrement coupant dans la zone proche de la pointe 13 et le profil de l'arête de coupe 24 s'émousse progressivement le long de l'instrument 10.

Dans la description qui va suivre les éléments identiques portent les mêmes numéros de référence.

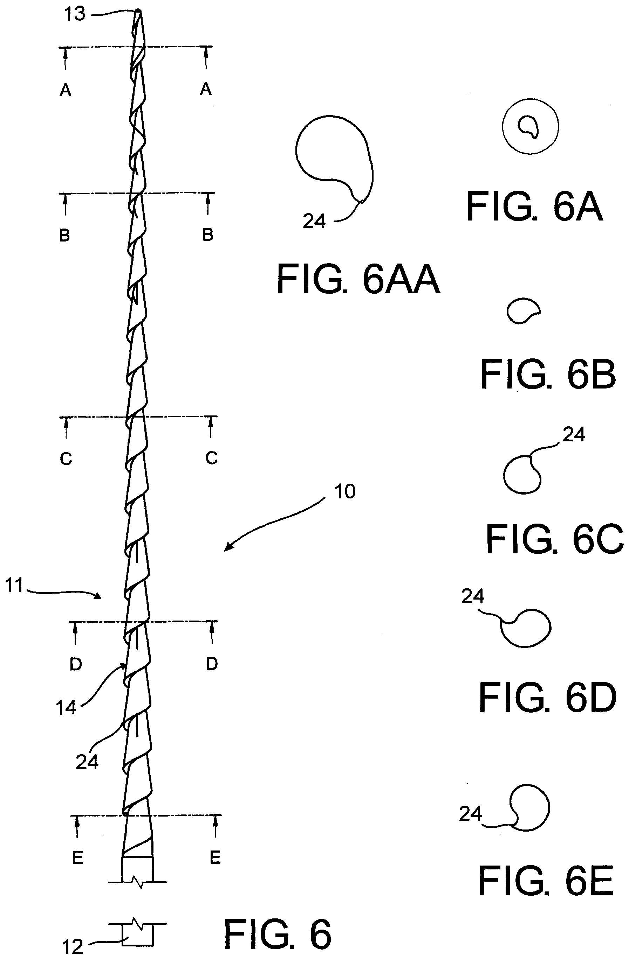

L'instrument 10 représenté par la figure 6 comporte, comme précédemment une partie de travail 11, de section transversale sensiblement parallélépipédique, et un embout de maintien 12 destiné à monter l'instrument dans un mandrin entraîné par un moteur électrique. Dans cette forme de réalisation, la partie de travail 11 est pourvue, comme dans le cas représenté par la figure 5, d'une seule goujure hélicoïdale 14 formant une arête, dite arête de coupe 24.

Dans cette forme de réalisation les vues en coupe transversale 6A à 6E selon des plans de coupe respectivement désignés par A-A; B-B; C-C; D-D et E-E, ainsi que la vue agrandie de la figure 6 AA montrent la disposition de l'arête 24. Cette réalisation correspond, à la nuance près que l'instrument 10 ne comporte qu'une seule goujure 14, à l'instrument décrit en référence à la figure 1. L'instrument est un outil de coupe avec un angle de coupe y négatif dans la partie voisine de la pointe 13, mais variable sur la longueur de la partie de travail 11.

Comme dans l'exemple précédent, on constate que l'angle de taillant β, l'angle de dépouille α et l'angle de coupe γ sont variables tout au long de la partie de travail 11. Dans le présent cas, l'instrument est raclant dans la zone proche de la pointe 13 et le profil de l'arête de coupe 24 s'affine progressivement le long de l'instrument 10 jusqu'à devenir une arête tranchante à proximité de l'embout de maintien 12 où l'instrument a une fonction de coupe.

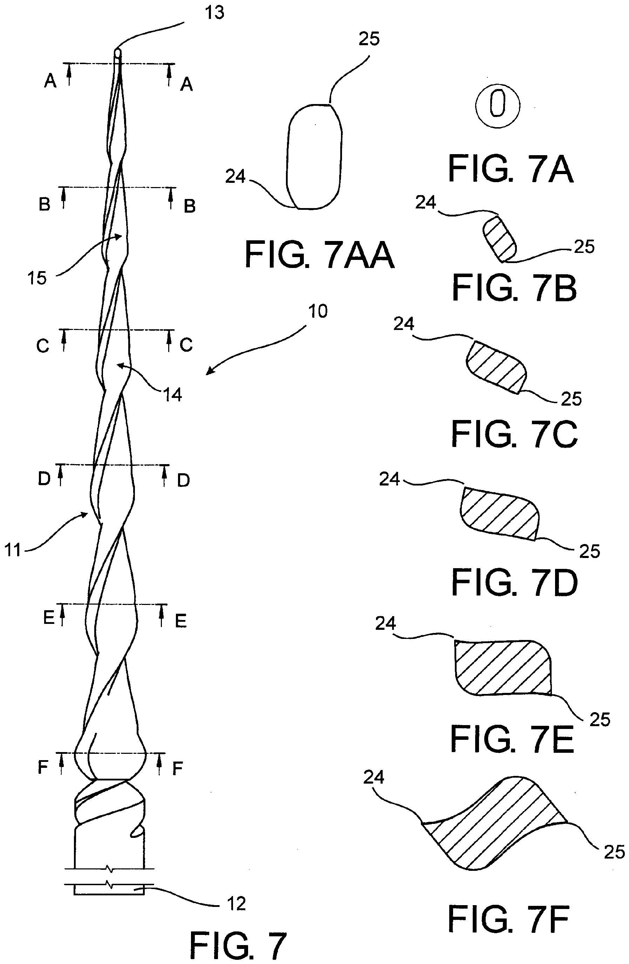

L'instrument 10 illustré par la figure 7 présente une section plus ou moins rectangulaire et comporte deux goujures 14 et 15 hélicoïdales disposées de façon sensiblement symétrique tout au long de la partie de travail 11. On notera, au vu des coupes transversales faites tout au long de la partie de travail 11, que l'instrument 10 est essentiellement un outil de raclage à proximité de la pointe 13 et se transforme progressivement en un outil de coupe lorsqu'on se rapproche de l'embout de maintien 12. Les arêtes de coupe 24 et 25 des goujures 14 et 15 sont relativement émoussées vers la pointe 13 et deviennent progressivement tranchantes vers l'embout de maintien 12.

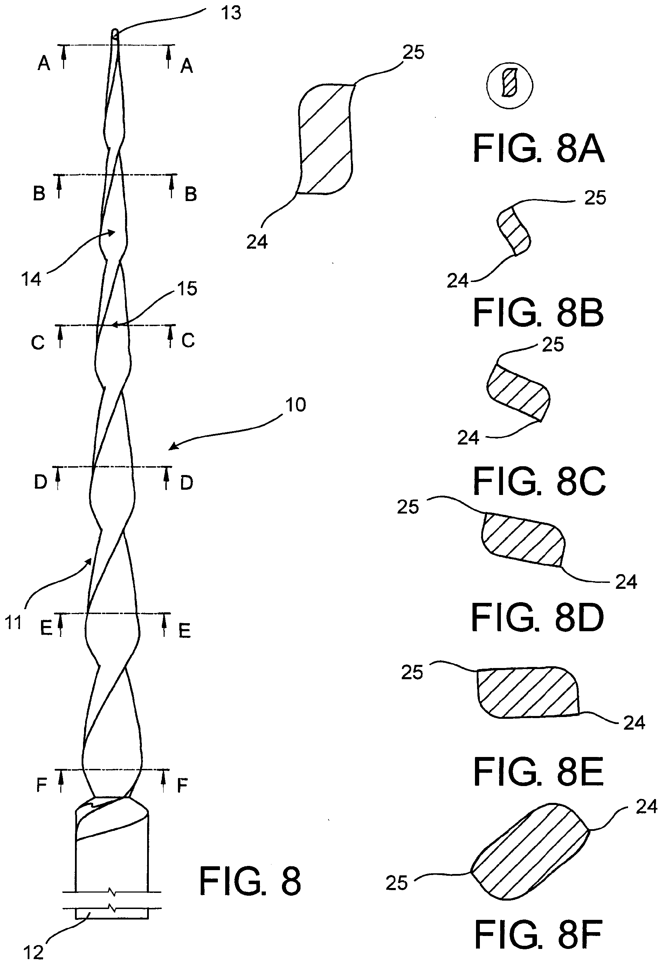

L'instrument 10 illustré par la figure 8 est similaire à celui qui est représenté par la figure 7 et présente une section plus ou moins rectangulaire, comportant deux goujures 14 et 15 hélicoïdales disposées de façon sensiblement symétrique tout au long de la partie de travail 11. On notera, au vu des coupes transversales faites tout au long de la partie de travail 11 qu'à l'inverse de l'instrument de la figure 7, le présent instrument 10 est essentiellement un outil de coupe à proximité de la pointe 13 et se transforme progressivement en un outil de raclage lorsqu'on se rapproche de l'embout de fixation 12. Les arêtes 24 et 25 des goujures 14 et 15 sont relativement coupantes vers la pointe 13 et deviennent progressivement émoussées vers l'embout de maintien 12.

Les figures 9 et 10 représentent deux formes de réalisation de l'instrument 10 dans lesquelles la partie dite de travail 11 comporte trois goujures hélicoïdales 14, 15 et 16 définissant trois arêtes 24, 25 et 26.

Sur l'instrument 10 représenté par la figure 9, les arêtes 24, 25 et 26 sont d'abord des arêtes de coupe puis deviennent des arrêtes de raclage et sur l'instrument 10 représenté par la figure 10 les arêtes sont d'abord des arêtes de raclage pour devenir des arêtes de coupe, en se déplaçant de la pointe 13 vers l'embout de fixation 12. Les angles de taillant, de dépouille et de coupe peuvent varier indépendamment les uns des autres et tout au long de la partie de travail 11. L'angle de taillant qui est l'angle que forment les tangentes aux deux faces d'une même arête, définit en quelque sorte la finesse du tranchant et la capacité de coupe de l'instrument, mais également la souplesse de la zone concernée de cet instrument. En effet, plus l'instrument est fin, c'est-à-dire plus la surface de sa section transversale est petite, plus il devient souple. La possibilité de moduler les angles de taillant, de dépouille et de coupe permet d'adapter l'instrument, par zones réparties sur toute la longueur de la partie de travail, en fonction des besoins du praticien.

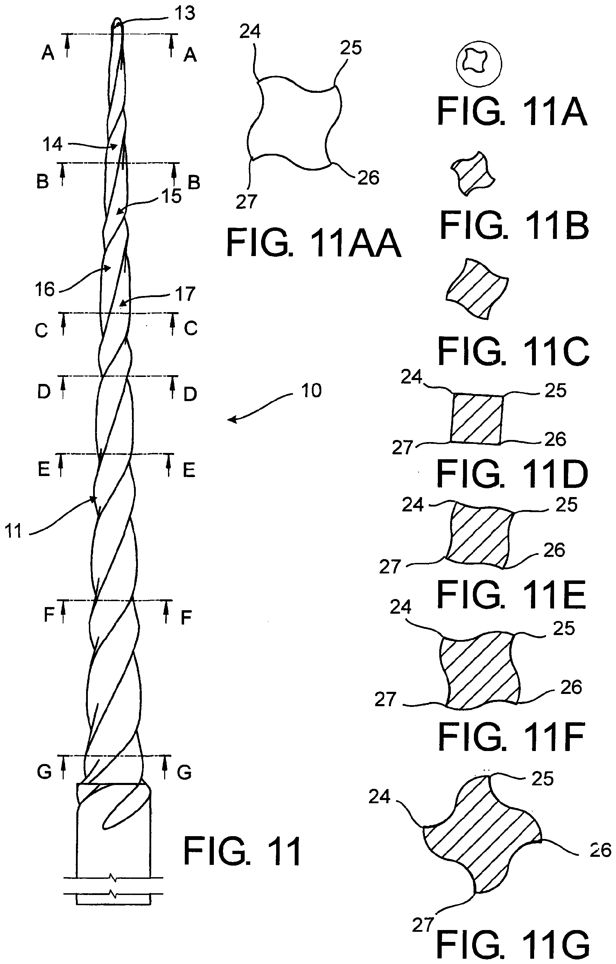

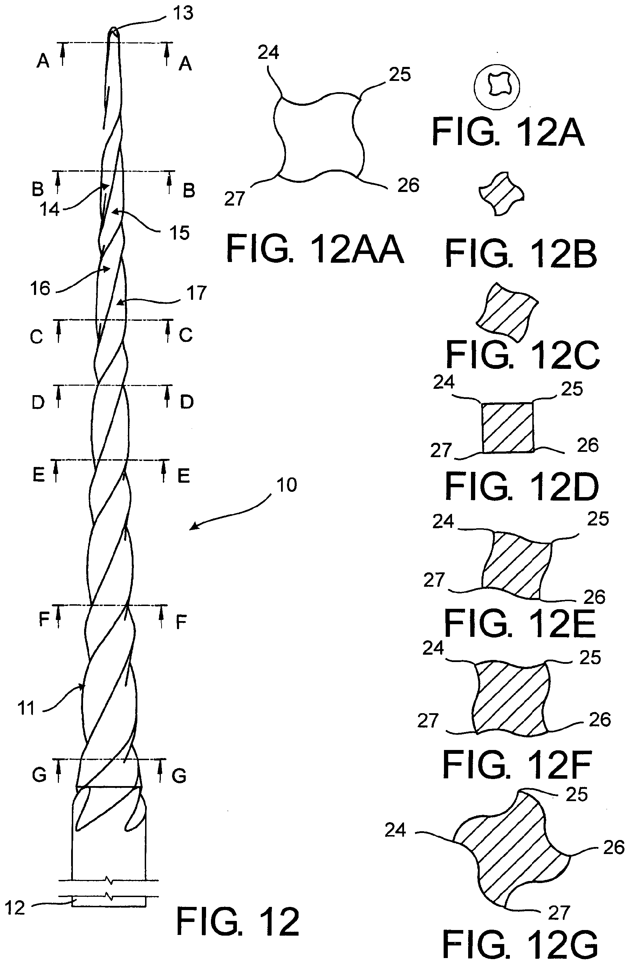

Les figures 11 et 12 sont des vues qui illustrent un instrument comportant quatre goujures 14, 15, 16 et 17 qui définissent quatre crêtes ayant respectivement les quatre arêtes 24, 25, 26 et 27 des sections transversales représentées par les vues en coupe 11A à 11G et 11AA ainsi que 12A à 12G et 12 AA. Dans la partie proche de la pointe 13, l'instrument 10 de la figure 11 est un outil de raclage qui devient progressivement un outil de coupe vers l'embout de maintien 12. Sur l'instrument 10 de la figure 12, l'instrument est d'abord un outil de coupe à proximité de la pointe 13 pour se transformer progressivement en outil de raclage vers l'embout de maintien 12.

Ces variations ont l'avantage de permettre au praticien d'adapter les différents instruments aux séquences de traitement qu'il effectue et, en cours d'une séquence, à la géométrie du canal radiculaire du patient.

La présente invention n'est pas limitée aux formes de réalisation préférées décrites, mais peut subir différentes modifications ou variantes évidentes pour l'homme du métier. En particulier, sur un même instrument, la géométrie des arêtes peut être modulée en passant d'une fonction de raclage et/ou de lissage à une fonction de coupe pour revenir à une fonction de raclage ou inversement sur toute la longueur de la partie de travail.

En outre l'instrument peut comporter un nombre plus important de goujures notamment hélicoïdales. Ce nombre est uniquement limité par les dimensions transversales de l'instrument.

## Revendications

1. Instrument endodontique pour l'alésage de canaux radiculaires, notamment un instrument d'alésage flexible, ledit instrument (10) présentant un axe longitudinal de rotation et comportant une partie (11), dite de travail, terminée à une extrémité par une pointe (13) et à l'autre extrémité par un embout de maintien (12) agencé pour être fixé à un mandrin entraîné par un moteur électrique, ladite partie de travail (11) comportant au moins une goujure hélicoïdale (14) qui comporte au moins une crête (20) ayant une arête (24) portant un sommet (A), un flanc intérieur (10a) et un flanc extérieur (10b), disposés de part et d'autre de ladite arête (24), le sommet (A) de l'arête (24) étant situé sur un cercle (E) dont le centre (O) est disposé sur l'axe longitudinal de rotation de l'instrument, **caractérisé en ce que**, à différents niveaux de la longueur de ladite partie de travail (11), l'angle de coupe (γA) au sommet (A) de ladite au moins une goujure (14), défini comme étant l'angle que forme la tangente (AY) au flanc intérieur (10a) avec le rayon (AO) issu du sommet (A) du cercle (E), est variable en grandeur, en fonction de la position du sommet (A) le long de la partie de travail (11), et **en ce que** cet angle est soit négatif lorsque la tangente (AY) au flanc intérieur (10a) de la crête (20) est disposée du côté opposé à la tangente (AX) au flanc extérieur (10b) de ladite crête (20) par rapport au rayon (AO) du cercle (E), soit nul lorsque la tangente (AY) au flanc intérieur (10a) de la crête (20) est confondue avec le rayon (AO) du cercle (E), soit positif lorsque la tangente (AY) au flanc intérieur (10a) de la crête (20) est disposée du même coté que la tangente (AX) au flanc extérieur (10b) de cette crête par rapport au rayon (AO) du cercle (E), pour définir le long de la crête (20) de ladite au moins une goujure, une zone de raclage, une zone dite neutre, et une zone de coupe active.

2. Instrument endodontique selon la revendication 1, ledit instrument (10) comportant plusieurs goujures (14, 15, 16) définissant plusieurs crêtes (20) comportant chacune une arête (24, 25, 26) portant un sommet (A, B, C) et deux flancs (10a, 10b; 10b, 10c; 10c, 10a) disposés de part et d'autre de chacune des arêtes, **caractérisé en ce que** à différents niveaux de la longueur de la partie de travail (11), les angles de coupe (γA , γB, γC) aux sommets respectifs (A, B, C), définis par les tangentes (AY, BY, CY) aux sommets des flancs intérieurs (10a, 10b, 10c) des crêtes (20), avec les rayons (AO, BO, CO) respectifs du cercle (E) correspondant aux sommets (A, B, C), sont variables en grandeur, indépendamment les uns des autres, sur au moins une zone déterminée de ladite partie de travail (11), et sont soit négatifs lorsque les tangentes (AY, BY, CY) aux flancs intérieurs (10a, 10b, 10c) des crêtes (20) sont disposées du côté opposé aux tangentes (AX, BX, CX) aux flancs extérieurs (10b, 10c, 10a) desdites crêtes (20) par rapport aux rayons (AO, BO, CO) du cercle (E), soit nuls lorsque les tangentes (AY, BY, CY) aux flancs intérieurs (10a, 10b, 10c) des crêtes (20) sont confondues avec les rayons (AO, BO, CO) du cercle, soit positifs lorsque les tangentes (AY, BY, CY) aux flancs intérieurs (10a, 10b, 10c) des crêtes (20) sont disposées du même côté que les tangentes (AX, BX, CX) aux flancs extérieurs opposés (10b, 10c, 10a) desdites crêtes (20) par rapport aux rayons (AO, BO, CO) du cercle (E), pour définir le long des arêtes d'une même crête, une zone de raclage, une zone de coupe plus ou moins active, de façon à ce que la partie de travail comporte au moins une zone dite de raclage, au moins une zone dite neutre, et au moins une zone dite de coupe active.

3. Instrument endodontique selon la revendication 2, **caractérisé en ce qu'**il comporte au moins une zone dans laquelle l'angle de coupe (γA, γB, γC) au sommet respectif (A, B, C) est progressivement croissant de la pointe (13) vers l'embout de maintien (12) dudit instrument.

4. Instrument endodontique selon la revendication 2, **caractérisé en ce qu'**il comporte au moins une zone dans laquelle l'angle de coupe (γA, γB, γC) au sommet respectif (A, B, C) est progressivement décroissant de la pointe (13) vers l'embout de maintien (12) dudit instrument.

5. Instrument endodontique selon les revendications 1 et 2, **caractérisé en ce qu'**il comporte plusieurs zones réparties le long de la partie de travail (11), dans lesquelles l'angle de dépouille (αA) à un sommet (A), qui est l'angle formé par la tangente (AX) à ce sommet au flanc extérieur (10b) de la crête (20) correspondante, avec la tangente (AS) à ce même sommet, au cercle (E), l'angle de taillant (βA) formé par ladite tangente (AX), avec la tangente (AY) au flanc intérieur (10a) de la même crête (20) et l'angle de coupe active (γA) sont différents d'une zone à une autre.

6. Instrument endodontique selon la revendication 1, **caractérisé en ce qu'**il comporte deux goujures (14, 15) qui définissent deux crêtes (20) comportant chacune une arête (24, 25) portant un sommet et deux flancs respectivement disposés de part et d'autre de ladite arête (24, 25).

7. Instrument endodontique selon la revendication 1, **caractérisé en ce qu'**il comporte quatre goujures (14, 15, 16, 17) qui définissent quatre crêtes (20) comportant chacune une arête (24, 25, 26, 27) portant un sommet et deux flancs respectivement disposés de part et d'autre de ladite arête (24, 25, 26, 27).

## Patentansprüche

1. Endodontisches Instrument zum Reiben von Wurzelkanälen, insbesondere ein flexibles Reibinstrument, wobei das Instrument (10) eine Längsdrehachse aufweist und einen sogenannten Arbeitsabschnitt (11) umfasst, der an einem Ende mit einer Spitze (13) und am anderen Ende mit einem Halteendstück (12) ausgeführt ist, das so angeordnet ist, dass es an einem Dorn befestigt werden kann, der von einem Elektromotor angetrieben wird, wobei der Arbeitsabschnitt (11) mindestens eine Spiralnut (14) umfasst, die mindestens einen Kamm (20) umfasst, der eine Schneidkante (24) aufweist, welche einen Scheitelpunkt (A), eine Innenflanke (10a) und eine Außenflanke (10b) aufweist, die beiderseits der Schneidkante (24) angeordnet sind, wobei der Scheitelpunkt (A) der Schneidkante (24) sich auf einem Kreis (E) befindet, dessen Mittelpunkt (O) auf der Längsdrehachse des Instruments angeordnet ist, **dadurch gekennzeichnet, dass** auf verschiedenen Ebenen der Länge des Arbeitsabschnitts (11) der Schnittwinkel (yA) am Scheitelpunkt (A) der mindestens einen Nut (14), der definiert wird als der Winkel, den die Tangente (AY) an der Innenflanke (10a) mit dem Radius (AO), der vom Scheitelpunkt (A) des Kreises (E) kommt, bildet, in Abhängigkeit von der Position des Scheitelpunkts (A) entlang des Arbeitsabschnitts (11) größenveränderlich ist, und dadurch, dass dieser Winkel entweder negativ ist, wenn die Tangente (AY) an der Innenflanke (10a) des Kamms (20) auf der gegenüberliegenden Seite der Tangente (AX) an der Außenflanke (10b) dieses Kamms (20) in Bezug auf den Radius (AO) des Kreises (E) angeordnet ist, oder Null, wenn die Tangente (AY) an der Innenflanke (10a) des Kamms (20) mit dem Radius (AO) des Kreises (E) zusammenfällt, oder positiv, wenn die Tangente (AY) an der Innenflanke (10a) des Kamms (20) auf derselben Seite wie die Tangente (AX) an der Außenflanke (10b) dieses Kamms in Bezug auf den Radius (AO) des Kreises (E) angeordnet ist, um entlang des Kamms (20) der mindestens einen Nut einen Kratzbereich, einen sogenannten neutralen Bereich und einen aktiven Schneidbereich zu definieren.

2. Endodontisches Instrument nach Anspruch 1, wobei das Instrument (10) mehrere Nuten (14, 15, 16) umfasst, die mehrere Kämme (20) definieren, die jeweils eine Schneidkante (24, 25, 26) umfassen, die einen Scheitelpunkt (A, B, C) und zwei Flanken (10a, 10b; 10b, 10c; 10c, 10a) aufweist, die beiderseits jeder der Kanten angeordnet sind, **dadurch gekennzeichnet, dass** auf verschiedenen Ebenen der Länge des Arbeitsabschnitts (11) die Schnittwinkel (γA, γB, γC) an den jeweiligen Scheitelpunkten (A, B, C), definiert durch die Tangenten (AY, BY, CY) an den Scheitelpunkten der Innenflanken (10a, 10b, 10c) der Kämme (20), mit den jeweiligen Radien (AO, BO, CO) des Kreises (E), die den Scheitelpunkten (A, B, C) entsprechen, in mindestens einem bestimmten Bereich dieses Arbeitsabschnitts (11) voneinander unabhängig größenvariabel sind; und sie sind entweder negativ, wenn die Tangenten (AY, BY, CY) an den Innenflanken (10a, 10b, 10c) der Kämme (20) auf der gegenüberliegenden Seite der Tangenten (AX, BX, CX) an den Außenflanken (10b, 10c, 10a) dieser Kämme (20) in Bezug auf die Radien (AO, BO, CO) des Kreises (E) angeordnet sind, oder Null, wenn die Tangenten (AY, BY, CY) an den Innenflanken (10a, 10b, 10c) der Kämme (20) mit den Radien (AO, BO, CO) des Kreises zusammenfallen, oder positiv, wenn die Tangenten (AY, BY, CY) an den Innenflanken (10a, 10b, 10c) der Kämme (20) auf derselben Seite wie die Tangenten (AX, BX, CX) an den gegenüberliegenden Außenflanken (10b, 10c, 10a) der Kämme (20) in Bezug auf die Radien (AO, BO, CO) des Kreises (E) angeordnet sind, um entlang der Schneidkanten eines Kamms einen Kratzbereich, einen mehr oder weniger aktiven Schneidbereich zu definieren, so dass der Arbeitsabschnitt mindestens einen sogenannten Kratzbereich, mindestens einen sogenannten neutralen Bereich und mindestens einen sogenannten aktiven Schneidbereich umfasst.

3. Endodontisches Instrument nach Anspruch 2, **dadurch gekennzeichnet**, dasses mindestens einen Bereich umfasst, in dem der Schnittwinkel (γA, γB, γC) am jeweiligen Scheitelpunkt (A, B, C) von der Spitze (13) hin zum Halteendstück (12) des Instruments progressiv zunimmt.

4. Endodontisches Instrument nach Anspruch 2, **dadurch gekennzeichnet, dass** es mindestens einen Bereich umfasst, in dem der Schnittwinkel (γA, γB, γC) am jeweiligen Scheitelpunkt (A, B, C) von der Spitze (13) hin zum Halteendstück (12) des Instruments progressiv abnimmt.

5. Endodontisches Instrument nach Anspruch 1 und 2, **dadurch gekennzeichnet, dass** es mehrere entlang des Arbeitsabschnitts (11) verteilte Bereiche umfasst, in denen der Freiwinkel (αA) an einem Scheitelpunkt (A), der der Winkel ist, der durch die Tangente (AX) an diesem Scheitelpunkt an der Außenflanke (10b) des entsprechenden Kamms (20) mit der Tangente (AS) an diesem Scheitelpunkt am Kreis (E) gebildet wird, wobei der Keilwinkel (βA), der durch die Tangente (AX) mit der Tangente (AY) an der Innenflanke (10a) dieses Kamms (20) und der aktive Schnittwinkel (γA) von Bereich zu Bereich unterschiedlich sind.

6. Endodontisches Instrument nach Anspruch 1, **dadurch gekennzeichnet, dass** es zwei Nuten (14, 15) umfasst, die zwei Kämme (20) definieren, die jeweils eine Schneidkante (24, 25) umfassen, die einen Scheitelpunkt und zwei Flanken aufweist, die jeweils beiderseits dieser Schneidkante (24, 25) angeordnet sind.

7. Endodontisches Instrument nach Anspruch 1, **dadurch gekennzeichnet, dass** es vier Nuten (14, 15, 16, 17) umfasst, die vier Kämme (20) definieren, die jeweils eine Schneidkante (24, 25, 26, 27) umfassen, die einen Scheitelpunkt und zwei Flanken aufweist, die jeweils beiderseits der Schneidkante (24, 25, 26, 27) angeordnet sind.

## Claims

1. Endodontic instrument for drilling root canals, in particular a flexible drilling instrument, said instrument (10) having a longitudinal axis of rotation and comprising what is called a working part (11), which terminates at one end in a tip (13) and at the other end in a securing piece (12) designed to be fixed to a mandrel driven by an electric motor, said working part (11) comprising at least one helical flute (14) which has at least one ridge (20), the ridge (20) having an edge (24) with a peak (A), an inner flank (10a) and an outer flank (10b), which are arranged on either side of said edge (24), the peak (A) of the edge (24) being situated on a circle (E) whose centre (O) is arranged on the longitudinal axis of rotation of the instrument, **characterized in that**, at different levels along the length of said working part (11), the cutting angle (γA) at the peak (A) of said at least one flute (14), defined as being the angle formed by the tangent (AY) to the inner flank (10a) with the radius (AO) originating from the peak (A) of the circle (E), is variable in size, depending on the position of the peak (A) along the working part (11), and **in that** this angle is either negative when the tangent (AY) to the inner flank (10a) of the ridge (20) is arranged on the side opposite the tangent (AX) to the outer flank (10b) of said ridge (20) with respect to the radius (AO) of the circle (E), or zero when the tangent (AY) to the inner flank (10a) of the ridge (20) is coincident with the radius (AO) of the circle (E), or positive when the tangent (AY) to the inner flank (10a) of the ridge (20) is arranged on the same side as the tangent (AX) to the outer flank (10b) of this ridge with respect to the radius (AO) of the circle (E), in order to define, along the ridge (20) of said at least one flute, a scraping zone, a neutral zone and an active cutting zone.

2. Endodontic instrument according to Claim 1, said instrument (10) comprising a plurality of flutes (14, 15, 16) defining a plurality of ridges (20) which each comprise an edge (24, 25, 26) with a peak (A, B, C) and two flanks (10a, 10b; 10b, 10c; 10c, 10a) arranged on either side of each of the edges, **characterized in that**, at different levels along the length of the working part (11), the cutting angles (γA, γB, γC) at the respective peaks (A, B, C), defined by the tangents (AY, BY, CY) to the peaks of the inner flanks (10a, 10b, 10c) of the ridges (20), with the respective radii (AO, BO, CO) of the circle (E) corresponding to the peaks (A, B, C), are variable in size, independently of one another, over at least one defined zone of said working part (11), and are either negative when the tangents (AY, BY, CY) to the inner flanks (10a, 10b, 10c) of the ridges (20) are arranged on the side opposite the tangents (AX, BX, CX) to the outer flanks (10b, 10c, 10a) of said ridges (20) with respect to the radii (AO, BO, CO) of the circle (E), or zero when the tangents (AY, BY, CY) to the inner flanks (10a, 10b, 10c) of the ridges (20) are coincident with the radii (AO, BO, CO) of the circle, or positive when the tangents (AY, BY, CY) to the inner flanks (10a, 10b, 10c) of the ridges (20) are arranged on the same side as the tangents (AX, BX, CX) to the opposite outer flanks (10b, 10c, 10a) of said ridges (20) with respect to the radii (AO, BO, CO) of the circle (E), in order to define, along the edges of one and the same ridge, a scraping zone, a more or less active cutting zone, in such a way that the working part comprises at least one scraping zone, at least one neutral zone and at least one active cutting zone.

3. Endodontic instrument according to Claim 2, **characterized in that** it comprises at least one zone in which the cutting angle (γA, γB, γC) at the respective peak (A, B, C) increases progressively from the tip (13) towards the securing piece (12) of said instrument.

4. Endodontic instrument according to Claim 2, **characterized in that** it comprises at least one zone in which the cutting angle (γA, γB, γC) at the respective peak (A, B, C) progressively decreases from the tip (13) towards the securing piece (12) of the instrument.

5. Endodontic instrument according to Claims 1 and 2, **characterized in that** it comprises a plurality of zones distributed along the working part (11), in which zones the relief angle (αA) at a peak (A), which is the angle formed by the tangent (AX) at this peak to the outer flank (10b) of the corresponding ridge (20), with the tangent (AS) at this same peak, to the circle (E), the wedge angle (βA) formed by said tangent (AX), with the tangent (AY) to the inner flank (10a) of the same ridge (20), and the active cutting angle (γA) are different from one zone to another.

6. Endodontic instrument according to Claim 1, **characterized in that** it comprises two flutes (14, 15) which define two ridges (20), each comprising an edge (24, 25) with a peak and two flanks arranged respectively on either side of said edge (24, 25).

7. Endodontic instrument according to Claim 1, **characterized in that** it comprises four flutes (14, 15, 16, 17) which define four ridges (20), each comprising an edge (24, 25, 26, 27) with a peak and two flanks arranged respectively on either side of said edge (24, 25, 26, 27).
